Europäisches Patentamt

European Patent Office

Office européen des brevets

(11) Publication number: **0 089 337**
**B1**

# EUROPEAN PATENT SPECIFICATION

(45) Date of publication of patent specification: **12.08.87**

(21) Application number: **81902873.9**

(22) Date of filing: **30.09.81**

(86) International application number:
**PCT/US81/01321**

(87) International publication number:
**WO 83/01237 14.04.83 Gazette 83/09**

(51) Int. Cl.⁴: **B 64 C 1/14, E 06 B 3/20,**
**E 06 B 3/26, E 06 B 3/64,**
**B 31 D 3/02, B 31 C 13/00,**
**B 32 B 31/28, B 65 H 81/00**

(54) COMPOSITE STRUCTURES WINDOW BELT AND METHOD OF MAKING.

(43) Date of publication of application:
**28.09.83 Bulletin 83/39**

(45) Publication of the grant of the patent:
**12.08.87 Bulletin 87/33**

(84) Designated Contracting States:
**DE FR GB NL SE**

(56) References cited:
**DE-A-1 100 917**
**DE-A-1 555 631**
**FR-A-1 304 064**
**FR-A-2 394 728**
**GB-A-1 398 268**
**JP-A-11 007 648**
**US-A-2 504 204**
**US-A-2 767 443**
**US-A-2 989 787**
**US-A-3 143 306**
**US-A-3 356 403**
**US-A-3 429 530**
**US-A-3 528 867**
**US-A-3 906 669**
**US-A-4 018 642**
**US-A-4 151 031**

(73) Proprietor: **THE BOEING COMPANY**
**P.O. Box 3707 Mail Stop 7E-25**
**Seattle Washington 98124-2207 (US)**

(72) Inventor: **WHITENER, Philip Charles**
**2624 Southwest 167th Place**
**Seattle, WA 98166 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

(56) References cited:
**US-A-4 172 562**
**US-A-4 259 821**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Background of the Invention

The use of reinforced plastics in composite structures has been increasing rapidly in the aircraft industry due to the high strength to weight ratio of the composite. The composites often must be tied by mechanical fasteners in order to transfer loads from the composite to metallic structures. These fasteners weaken the structure and add weight and increase manufacturing costs.

It was found that a composite structure window belt could be made that has all but eliminated the need for fasteners.

The window according to the invention is characterized by the features as described in claims 1 and 5.

It is remarked that US—A—3 906 669 discloses a window adapted to be incorporated in an aircraft. This known window, however, is not made of composite structures.

The invention relates also to a method of preparing an elongated section of a composite structure window belt characterized by the features as described in claim 9.

Description of the Drawings.

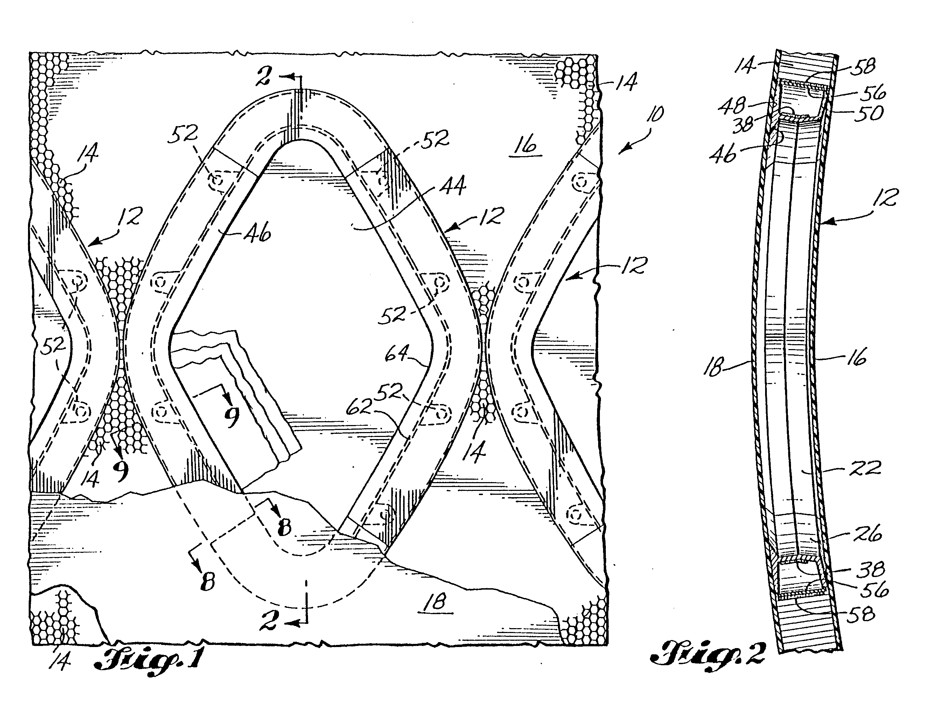

Figure 1 shows a fragmented plan view of a window belt of this invention.

Figure 2 shows a section taken along line 2—2 of Figure 1.

Figure 3 shows an exploded perspective view of the window frame shown as part of Figure 1.

Figure 4 shows a perspective view of the window frame of Figure 1 with the parts joined together, mounted on a mandrel, and filaments being wound around the frame.

Figure 5 shows a fragmented perspective view of a section of the window frame with fibers wound around it as in Figure 4.

Figure 6 shows a similar fragmented perspective view of a section of the window frame with an additional reinforcement with fibers wound around it.

Figure 7 shows a cross section taken along the line 7—7 of Figure 8.

Figure 8 shows a cross section taken along the line 8—8 of Figure 1.

Figure 9 shows a cross section with window taken along the line 9—9 of Figure 1.

Figure 10 shows a perspective view showing the window belt being formed and cured.

Figure 11 shows a plan view of a section of window belt with a different embodiment for the window frame.

Figure 12 shows a cross section taken along the line 12—12 of Figure 11.

Figure 13 shows a cross section taken along the line 13—13 of Figure 11.

Detailed Description

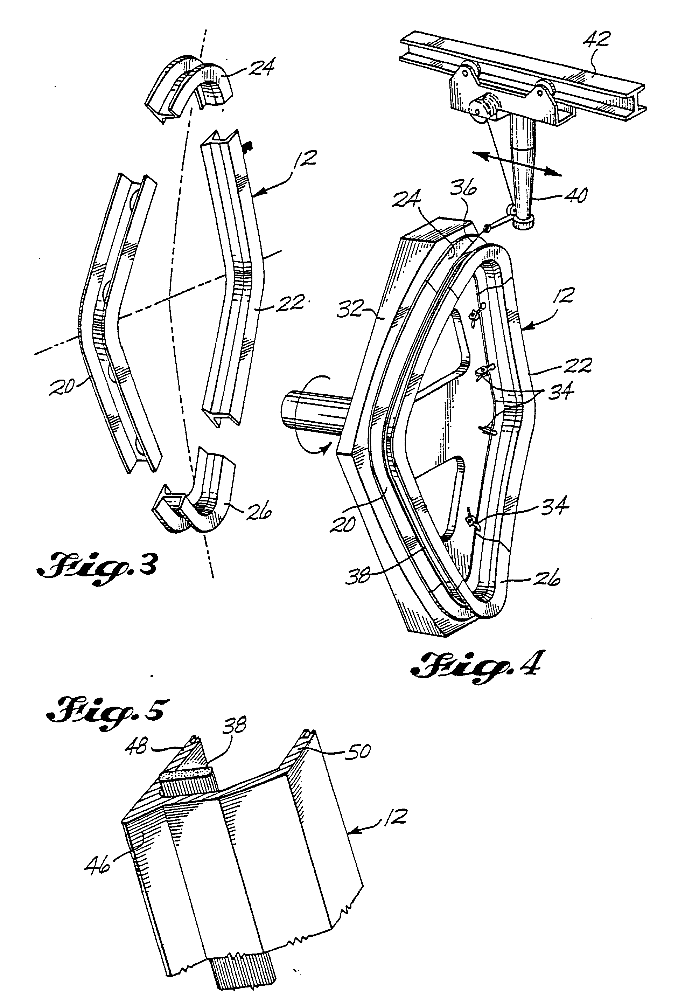

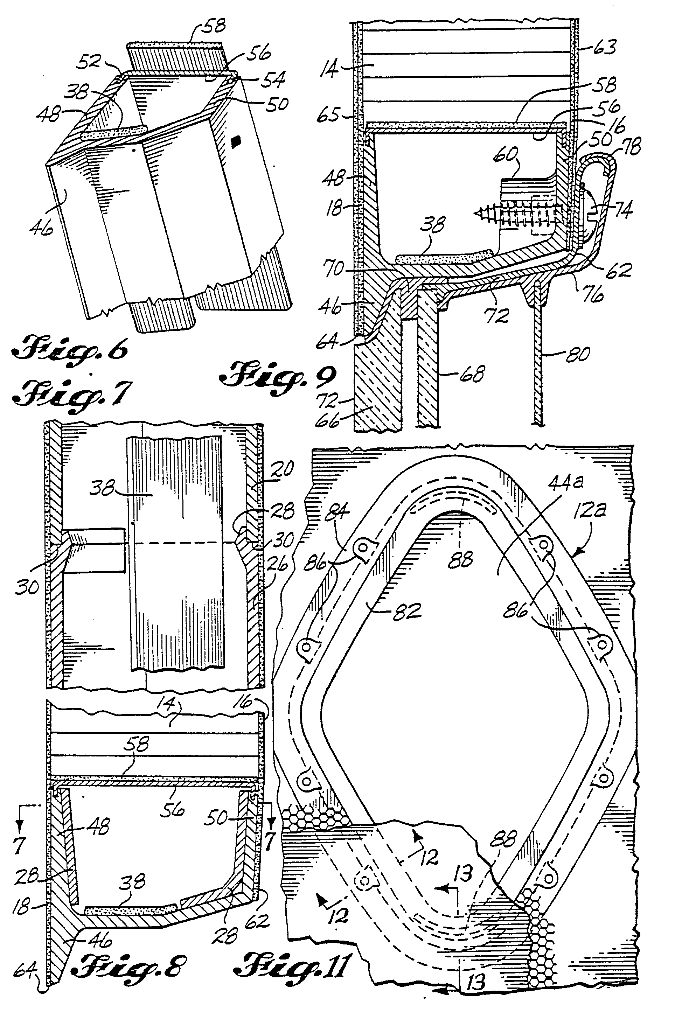

A composite structure window belt 10 is made up of a series of reinforced plastic window frames 12, honeycomb core material 14, an inner reinforced plastic cover 16 and an outer reinforced plastic cover 18. Each window frame, as is best shown in Figures 3 through 9, is made up of molded reinforced plastic parts 20, 22, 24 and 26. These parts are molded from any of the known reinforced plastics with graphite filaments and epoxy resin the preferred combination. The ends of the parts are formed to mate with each other. See Figures 7 and 8 where overlapping enlargement 28, part 26, mates with end 30 of part 20. This meeting is typical of all the ends of the parts. The parts are mated together, secured on mandrel 32 with fasteners 34, the mandrel rotated and a graphite filament 36 wound around the outer periphery of the window frame and built up into a reinforcing film 38. The filament is distributed from a dispenser 40 mounted to move back and forth on a monorail 42. The filament may have a coating of resin, or a resin may be applied to the built-up film. The parts when combined have a diamond-shaped window opening 44. All of the parts have a flange 46 that is tapered inwardly toward the window opening, and all have a pair of legs 48 and 50 that extend outward in a U shape. These legs have recesses 52 and 54 that are sized to accept and mate with ends of a cover plate 56. That cover plate is placed into the ends of the U-shaped legs and a layer of reinforcing filaments 58 in a resin is laid up on the outer surface. On the leg 50, which is furthest from the inwardly directed flange 46, there are a series of reinforcements 60.

The formed window frames 12 are spaced apart and placed in a line. Honeycomb core 14 is placed between and around the window frames. This honeycomb may be prepared from any of the known honeycomb materials, with a nonmetallic material preferred. A reinforced plastic outer cover 18 and inner cover 16 enclose the window frames 12 and the core material 14 and the lay-up is cured into the composite structure window belt. These covers may be prepared from any of the known reinforced plastics, with graphite filaments impregnated with an epoxy resin preferred. After the window belt is formed, the inner reinforced plastic cover is cut away on each window frame along the line 62, and the outer reinforced plastic cover is cut away along the line 64 to expose the window opening. However, it is preferred to wait until after the window belt is installed into a composite structure with a covering fiber reinforced inner layer 63 and fiber reinforced outer layer 65, as in Figure 9, and all the layers cut away at 62 and 64 at the same time. Figure 9 shows a typical window mounting in the window frame with window panes 66 and 68 held in spaced relation to each other with a shaped resilient insert 70. The insert is located to position the outer surface 72 of window pane 66 to follow the contour of the outer surface of the reinforcing cover 65. The window panes and the insert are held in position by a formed clip 72 that is secured to the window frames with a series of fasteners 74 that screw into the reinforcements 60 in the window frame. A spring clip 76 snaps over projection 78 of the formed clip and positions and holds a transparent sheet 80 in the window opening.

Figures 11 through 13 show a different embodiment of a window frame 12A for making up a composite structure window belt. In this window frame the frame is formed in one piece. This frame has an essentially diamond-shaped opening and has a modified Z-shaped cross section with flange 82 extending inward into the window opening at the outer side of the frame and an outwardly extending flange 84 at the inner side of the frame. A series of reinforcements 86 on the under side of the outwardly extending flange are used to accept a fastener for mounting a window to the window frame. The cross section of the frame is thickened at top and bottom 88 to add strength. To make up the window belt when using this embodiment, inner reinforcing plastic cover 16A and outer reinforced plastic cover 18A extend over core 14A and the window frames.

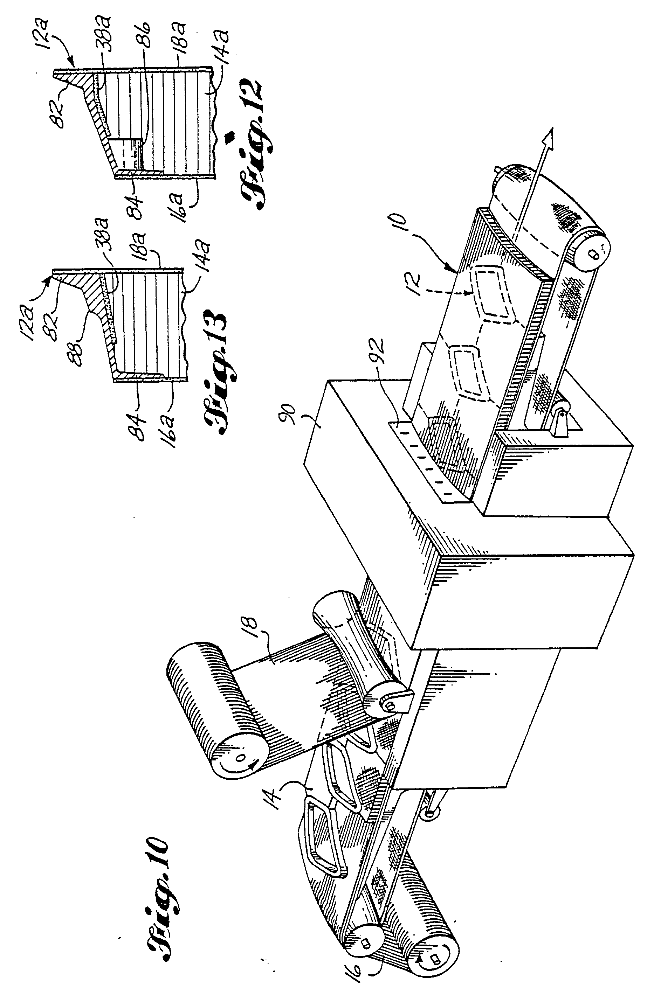

Figure 10 shows a preferred method of forming a window belt by passing the lay-up through a microwave curing applicator 90 which has a set of internal dies 92. First, a layer of graphite filaments impregnated with an epoxy resin is laid down. Formed window frames 12 are then laid up and surrounded with nonmetallic honeycomb core 14. A layer of graphite filaments impregnated with an epoxy resin is laid over the core with frames and advanced through the microwave applicator to cure the lay-up and continuously form a composite structure window belt.

## Claims

1. A window containing section (10) of a composite structure for fuselage comprising a row of spaced-apart reinforced plastic window frames (12), means (72, 74) on the window frames (12) for securing windows (66, 68) within the frames (12), characterized by a layer of reinforcing filaments coated with a resin wound around a periphery of each window frame (12), a core of honeycomb extending between window frames (12), a reinforcing filament wound resin impregnated inner shell (16) and a reinforcing filament wound resin impregnated outer shell (18) to make up a shaped composite structural section.

2. A window containing section of a composite structure as in claim 1 characterized in that the window frames (12) are in sections to be joined by the filaments (36) encircling the periphery.

3. A window containing section of a composite structure as in claim 2, characterized by: the window frames (12) having laterally outwardly extending U-shaped legs (48, 50), a reinforced plastic cover (56) to mate with the ends of the legs (48, 50) and a layer of reinforcing filaments (58) coated with a resin wound around the periphery of the mating plastic cover.

4. A window containing section of a composite structure as in claim 1 characterized in that the window frames (12) are each of a one-piece, essentially Z-shaped construction.

5. An elongated section of a composite structure containing windows, characterized by a series of spaced-apart, essentially diamond-shaped window frames (12, 12a) each made up of reinforced plastic, a series of reinforcing enlargements (60, 86) to accept a fastener (74) for joining a window (66, 68) to the frame, a honeycomb core (14) to extend between and around the window frames (12, 12a), a reinforcing filament wound resin impregnated inner shell (16) and a reinforcing filament wound resin impregnated outer shell (18) with the components making up an elongated section of a composite structure containing windows.

6. An elongated section of a composite structure containing windows, as claimed in claim 5 characterized by laterally outward extending U-shaped legs (48, 50), a tapered flange (46) to extend laterally inward, a layer of reinforcing filaments (58) coated with a resin wound around the outer periphery of the joined parts, with the enlargements (60) located along the inner side of the leg (50) that is furthest from the flange (46), a cover plate (56) of reinforced plastic to extend between the ends of the lugs (48, 50) and a layer of reinforcing filaments (58) coated with a resin wound around the outside of the cover plate (56).

7. An elongated section of a composite structure containing windows as claimed in claim 5 characterized by a modified Z-shaped cross section, with the enlargement (86) located along the inner side of an outer leg (84) of the modified Z-shape.

8. An elongated section of a composite structure containing windows as in claim 3 characterized by a layer of reinforcing filaments coated with a resin wound around the outer side of each window frame (12).

9. A method of preparing an elongated section of a composite structure window belt, with steps comprising: preparing fiber reinforced plastics for a window frame (12, 12a) with an essentially diamond-shaped opening, extending a tapered flange (42, 82) into the opening adjacent the outside of the window frame, extending a flange away from the opening adjacent the inside of the window frame (12, 12a) and providing reinforcements (60, 86) along the flange for fastening a window to the frame, winding a reinforcing filament into a coating impregnated with resin around the back side of the window frame, placing the window frame in a spaced-apart line, locating honeycomb core (14) in the area between and around the window frames, covering the window frames and the core with an inner layer (16) and an outer layer (18) of reinforcing filaments impregnated with a resin, and curing into a composite structure.

10. A method of preparing an elongated section of a composite structure as in claim 9 characterized by the further step of winding a reinforcing filament into a coating impregnated with resin around the back side of each window frame.

11. A method of preparing an elongated section of a composite structure as in claim 9 characterized by further steps comprising: extending a flange on each window frame away from the opening adjacent the outside of the window frame, preparing each window frame in sections, using matching ends on the sections, winding a reinforcing filament into a coating impregnated with resin around the back side of each window frame, locating a cover plate (56) for extending between the ends of the outwardly extending flanges, and winding a reinforcing filament into a coating impregnated with resin around the outside of the cover plate (56).

12. A method of preparing an elongated section of a composite structure window belt according to claim 9 characterized by passing the covered unit through the dies of a microwave curing applicator for curing into a composite structure window belt.

## Patentansprüche

1. Ein Fenster enthaltender Abschnitt (10) einer Verbundstruktur für einen Flugzeugrumpf, umfassend eine Reihe von im Abstand voneinander angeordneter verstärkter Kunststoffensterrahmen (12), Mittel (72, 74) auf den Fensterrahmen (12) zum Befestigen von Fenstern (66, 68) innerhalb der Rahmen (12), gekennzeichnet durch eine Schicht von verstärkenden, mit einem Harz beschichten Filamenten, die um einen Umfang von jedem Fensterrahmen (12) gewickelt ist, einen Wabenkern, der sich zwischen den Fensterrahmen (12) erstreckt, eine verstärkende, filamentbewickelte, harzimprägnierte innere Verkleidung (16) und eine verstärkende, filamentbewickelte, harzimprägnierte äußere Verkleidung (18) zum Aufbau eines geformten verbundstrukturellen Abschnitts.

2. Ein Fenster enthaltender Abschnitt einer Verbundstruktur nach Anspruch 1, dadurch gekennzeichnet, daß die Fensterrahmen (12) in Abschnitten vorliegen, die durch die Filamente (36), welche den Umfang umschließen, zu verbinden sind.

3. Ein Fenster enthaltender Abschnitt einer Verbundstruktur nach Anspruch 2, dadurch gekennzeichnet, daß die Fensterrahmen (12) sich seitlich nach auswärts erstreckende U-förmige Schenkel (48, 50) haben, sowie eine verstärkte Kunststoffabdeckung (56), welche mit den Enden der Schenkel (48, 50) in Eingriff kommt, und eine mit einem Harz beschichtete Schicht aus verstärkenden Filamenten (58), die um den Umfang der in Eingriff stehenden Kunststoffabdeckung gewickelt ist.

4. Ein Fenster enthaltender Abschnitt einer Verbundstruktur nach Anspruch 1, dadurch gekennzeichnet, daß die Fensterrahmen (12) je aus einem einstückigen, im wesentlichen Z-förmigen Aufbau sind.

5. Langgestreckter Abschnitt einer Fenster enthaltenden Verbundstruktur, gekennzeichnet durch eine Reihe von im Abstand voneinander angeordneter, im wesentlichen rautenförmiger Fensterrahmen (12, 12a), von denen jeder aus verstärktem Kunststoff gebildet ist, eine Reihe von verstärkenden Erweiterungen (60, 86) zum Annehmen eines Befestigungselements (74) für das Verbinden eines Fensters (66, 68) mit dem Rahmen, einen Wabenkern (14), der sich zwischen den Fensterrahmen (12, 12a) und um dieselben erstreckt, eine verstärkende, filamentbewickelte, harzimprägnierte innere Verkleidung (16) und eine verstärkende, filamentbewickelte, harzimprägnierte äußere Verkleidung (18), wobei die Komponenten einen langgestreckten Abschnitt einer Fenster enthaltenden Verbundstruktur bilden.

6. Langgestreckter Abschnitt einer Fenster enthaltenden Verbundstruktur nach Anspruch 5, gekennzeichnet durch seitlich nach auswärts erstreckende U-förmige Schenkel (48, 50), einen abgeschrägten Flansch (46), der sich seitlich nach einwärts erstreckt, eine Schicht von mit einem Harz beschichteten, verstärkenden Filamenten (58), die um den äußeren Umfang der verbundenen Teile herumgewickelt ist, wobei sich die Erweiterungen (60) entlang der inneren Seite des Schenkels (50) befinden, der am weitesten weg von dem Flansch (46) ist, eine Abdeckungsplatte (56) aus verstärktem Kunststoff, die sich zwischen den Enden der Schenkel (48, 50) erstreckt, und eine Schicht von mit einem Harz beschichteten, verstärkenden Filamenten (58), die um die Außenseite der Abdeckungsplatte (56) herumgewickelt ist.

7. Langgestreckter Abschnitt einer Fenster enthaltenden Verbundstruktur nach Anspruch 5, gekennzeichnet durch einen modifizierten Z-förmigen Querschnitt, wobei sich die Erweiterung (86) entlang der inneren Seite eines äußeren Schenkels (84) der modifizierten Z-Form befindet.

8. Langgestreckter Abschnitt einer Fenster enthaltenden Verbundstruktur nach Anspruch 7, gekennzeichnet durch eine mit einem Harz beschichtete Schicht von Verstärkenden Filamenten, die um die äußere Seite jedes Fensterrahmens (12) herumgewickelt ist.

9. Verfahren zum Herstellen eines langgestreckten Abschnitts eines Verbundstruktur-Fensterbands, wobei die Schritte folgendes umfassen: Herstellen von faserverstärktem Kunststoff für einen Fensterrahmen (12, 12a) mit einer im wesentlichen rautenförmigen Öffnung, Erstrecken eines Abgeschrägten Flanschs (46, 82) in die Öffnung benachbart der Außenseite des Fensterrahmens, Erstrecken eines Flanschs weg von der Öffnung benachbart der Innenseite des Fensterrahmens (12, 12a) und Vorsehen von Verstärkungen (60, 86) entlang dem Flansch für das Befestigen eines Fensters an dem Rahmen, Wikkeln eines verstärkenden Filaments zu einer mit Harz imprägnierten Beschichtung um die Rückseite des Fensterrahmens, Anordnen des Fensterrahmens in einer Abstandslinie, Anordnen eines Wabenkerns (14) in dem Bereich zwischen den Fensterrahmen und um die Fensterrahmen, Abdecken der Fensterrahmen und des Kerns mit einer inneren Schicht (16) und einer äußeren Schicht (18) aus verstärkenden, mit einem Harz imprägnierten Filamenten und Härten zu einer Verbundstruktur.

10. Verfahren zum Herstellen eines langgestreckten Abschnitts einer Verbundstruktur nach Anspruch 9, gekennzeichnet durch den weiteren Schritt des Wikkelns eines verstärkenden Filaments zu einer mit Harz imprägnierten Beschichtung um die Rückseite von jedem Fensterrahmen.

11. Verfahren zum Herstellen eines langgestreckten Abschnitts einer Verbundstruktur nach Anspruch 9, gekennzeichnet durch weitere Schritte, die folgendes umfassen: Erstrecken eines Flansches auf jedem Fensterrahmen weg von der Öffnung benachbart der Außenseite des Fensterrahmens, Herstellen jedes Fensterrahmens in Abschnitten, Verwenden von zusammenpassenden Enden auf den Abschnitten, Wickeln eines verstärkenden Filaments zu einer mit Harz imprägnierten Beschichtung um die Rückseite von jedem Fensterrahmen herum, Anordnen einer Abdeckungsplatte (56) zum Erstrecken zwischen den Enden der sich nach auswärts erstreckenden Flansche und Wickeln eines verstärkenden Filaments zu einer mit Harz imprägnierten Beschichtung um die Außenseite der Abdeckungsplatte (56) herum.

12. Verfahren zum Herstellen eines langgestreckten Abschnitts eines Verbundstruktur-Fensterbands nach Anspruch 9, gekennzeichnet durch Hindurchführen der abgedeckten Einheit durch die Stempel eines Mikrowellenhärtungsapplikators zum Härten zu einem Verbundstruktur-Fensterband.

**Revendications**

1. Section (10) d'une structure composite contenant des fenêtres pour fuselage, comprenant une rangée de cadres de fenêtres (12) espacés en matière plastique renforcée, des moyens (72, 74) prévus sur les cadres de fenêtres (12) pour fixer des fenêtres (66, 68) dans les cadres (12), caractérisée par une couche de filaments de renforcement enduits d'une résine, qui est enroulée autour de la périphérie de chaque cadre de fenêtre (12), une âme en nid d'abeilles qui s'étend entre les cadres de fenêtres (12), une coque intérieure enroulée (16) formée à base d'un filament de renforcement et imprégnée de résine et une coque extérieure enroulée (18) formée à base d'un filament de renforcement et imprégnée de résine, pour former une section structurale composite en forme.

2. Section d'une structure composite contenant des fenêtres selon la revendication 1, caractérisée en ce que les cadres de fenêtres (12) sont composés de sections qui sont destinées à être réunies par les filaments (36) qui encerclent la périphérie.

3. Section d'une structure composite contenant des fenêtres selon la revendication 2, caractérisée en ce que: les cadres de fenêtres (12) présentent des branches (48, 50) en forme de U qui s'étendent latéralement vers l'extérieur, un élément de fermeture en matière plastique renforcée (56) destiné à s'accoupler aux extrémités des branches (48, 50), et une couche de filaments de renforcement (58) enduits d'une résine époxy, qui est enroulée autour de la périphérie de l'élément de fermeture en matière plastique accouplé.

4. Section d'une structure composite contenant des fenêtres selon la revendication 1, caractérisée en ce que les cadres de fenêtres (12) sont chacun d'une construction en une seule pièce et à profil sensiblement en Z.

5. Section de forme allongée d'une structure composite contenant des fenêtres, caractérisée par une série de cadres de fenêtres espacés (12, 12a) sensiblement en losange, dont chacun est fait d'une matière plastique renforcée, une série de renflements de renforcement (60, 86) destinés à recevoir un organe de fixation (74) servant à assembler une fenêtre (66, 68) au cadre, une âme en nid d'abeilles (14) destinée à s'étendre entre les cadres de fenêtres (12, 12A) et autour de ces cadres, une coque intérieure enroulée (16) formée à base d'un filament de renforcement et imprégnée de résine et une coque extérieure enroulée (18) formée à base d'un filament de renforcement et imprégnée de résine, les composants formant une section allongée d'une structure composite contenant des fenêtres.

6. Section de forme allongée d'une structure composite contenant des fenêtres, selon la revendication 5, caractérisée en ce qu'elle comprend des branches en forme de U (48, 50) qui s'étendent latéralement vers l'extérieur, une aile à section décroissante (46) destinée à s'étendre latéralement vers l'intérieur, une couche de filaments de renforcement (58) enduits d'une résine et enroulés autour de la périphérie extérieur des pièces assemblées, les renflements (60) étant disposés le long de la face intérieure de la branche (50) qui est la plus éloignée de l'aile (46), une plaque de fermeture (56) en matière plastique renforcée destinée à s'étendre entre les extrémités des branches (48, 50) et une couche de filaments de renforcement (58) enduits d'une résine et enroulés autour de la face extérieure de la plaque de fermeture (56).

7. Section de forme allongée d'une structure composite contenant des fenêtres, selon la revendication 5, caractérisée par une section à profil en Z modifié, le renflement (86) étant placé le long de la face intérieure d'une branche extérieure (84) du profil en Z modifié.

8. Section de forme allongée d'une structure composite contenant des fenêtres, selon la revendication 7, caractérisée par une couche de filaments de renforcement enduits d'une résine et enroulés autour de la face extérieure de chaque cadre de fenêtre (12).

9. Procédé de préparation d'une section de forme allongée d'une ceinture de fenêtres de structure composite, comprend les phases qui consistent à: préparer des matière plastiques renforcées de fibres pour former un cadre de fenêtre (12, 12a) possédant une ouverture sensiblement en losange, à disposer une aile à section décroissante (46, 82) de façon qu'elle pénètre dans l'ouverture dans la région adjacente à la face intérieure du cadre de fenêtre, disposer une aile de façon qu'elle s'étende dans le sens qui s'éloigne de l'ouverture, dans la région adjacente à la face intérieure du cadre de fenêtre (12, 12a) et prévoir des renforcements (60, 86) le long de l'aile pour fixer une fenêtre au cadre, enrouler un filament de renforcement de manière à former un revêtement imprégné de résine autour de la face arrière du cadre de fenêtre, placer le cadre de fenêtre de façon à former une rangée de cadres espacés, disposer une âme en nid d'abeilles (14) dans la région située entre les cadres de fenêtres et autour de ces cadres, recouvrir les cadres de fenêtres et l'âme d'une couche intérieure (16) et d'une couche extérieure (18) formées de filaments de renforcement imprégnés d'une résine, et durcir l'ensemble pour obtenir une structure composite.

10. Procédé de préparation d'une section de forme allongée d'une structure composite selon la revendication 9, caractérisé par le phase additionnelle consistant à enrouler un filament de renforcement de façon à former un revêtement imprégné de résine autour de la face arrière de chaque cadre de fenêtre.

11. Procédé de préparation d'une section de forme allongée d'une structure composite selon la revendication 9, caractérisé par les phases additionnelles consistant à: prévoir une aile de façon qu'elle s'étende sur chaque cadre de fenêtre dans le sens qui s'éloigne de l'ouverture, dans la région adjacente à la face extérieure du cadre de fenêtre, préparer chaque cadre de fenêtre en plusieurs sections, utiliser des extrémités qui s'accouplent sur les sections, enrouler un filament de renforcement pour former un revêtement imprégné de résine autour de la face arrière de chaque cadre de fenêtre, placer une plaque de fermeture (56) de façon qu'elle s'étende entre les extrémités des ailes dirigées vers l'extérieur et enrouler un filament de renforcement pour former un revêtement imprégné de résine autour de la face extérieure de la plaque de fermeture (56).

12. Procédé de préparation d'une section allongée d'une ceinture de fenêtres de structure composite selon la revendication 9, caractérisé en ce qu'on fait passer l'unité revêtue à travers les filières d'un applicateur de durcissement à micro-ondes pour durcir l'unité et la transformer en une ceinture de fenêtres de structure composite.

_Fig.1_

_Fig.2_

0 089 337

*Fig.3*

*Fig.4*

*Fig.5*

0 089 337

Fig. 6

Fig. 7

Fig. 9

Fig. 8

Fig. 11

3

Fig.10

Fig.13

Fig.12

0 089 337